# EUROPEAN PATENT APPLICATION

(11) **EP 4 808 226 A1**
(43) Date of publication of application: **16.09.2026**
(21) Application number: 25163464.8
(22) Date of filing: 13.03.2025
(51) Int. Cl.: H04W 52/14, H04W 52/32, H04W 52/34

(54) **SYSTEM FOR TRANSMITTING DOWNLINK SIGNALS AND METHOD OF CONTROLLING A SYSTEM FOR TRANSMITTING DOWNLINK SIGNALS**

(71) Applicant: Rohde & Schwarz GmbH & Co. KG, 81671 München (DE)
(72) Inventor: Oestreicher, Lars, 81671 München (DE)
(74) Representative: Prinz & Partner mbB

(57) **Abstract**

The invention provides a system (10) for transmitting downlink signals to a user equipment (12) in a target reception area (14). The system (10) comprises a control module (18) and at least one transmitter (16). The control module (18) is configured to control the at least one transmitter (16) that is configured to establish a downlink channel (22) to the user equipment (12), via which downlink signals are transmitted to the user equipment (12) in the target reception area (14). The control module (18) is configured to adjust at least one parameter for transmitting the downlink signals based on an event detected. The at least one parameter is a number of transmitters (16) used, a transmission power, a modulation scheme, a coding scheme and/or a subcarrier spacing. Further, a method of controlling a system (10) for transmitting downlink signals is described.

## Description

The invention relates to a system for transmitting downlink signals to a user equipment in a target reception area. Further, the invention relates to a method of controlling a system for transmitting downlink signals to a user equipment in a target reception area.

In the state of the art, broadcasting networks, e.g. single-frequency networks (SFNs) or multi-frequency networks (MFNs), are known which comprise several transmitters that are operated at a certain power level all the time, namely 24 hours per day and 7 days per week, so called 24/7. It is however not necessary to run the transmitters all the time at the same power level, which depends on services, number of users and time.

The object of the invention is to improve the operation of the system.

The object is solved according to the invention by a system for transmitting downlink signals to a user equipment in a target reception area. The system comprises a control module and at least one transmitter. The control module is configured to control the at least one transmitter. The at least one transmitter is configured to establish a downlink channel to the user equipment, via which downlink signals are transmitted to the user equipment in the target reception area. The control module is configured to adjust at least one parameter for transmitting the downlink signals based on an event detected. The at least one parameter is a number of transmitters used, a transmission power, a modulation scheme, a coding scheme and/or a subcarrier spacing.

Further, the object is solved according to the invention by a method of controlling a system for transmitting downlink signals to a user equipment in a target reception area, wherein the method comprises the steps of:
- Detecting an event,
- Adjusting at least one parameter for transmitting the downlink signals based on the event detected, wherein the at least one parameter is a number of transmitters used, a transmission power, a modulation scheme, a coding scheme and/or a subcarrier spacing, and
- Transmitting a downlink signal based on at least one adjusted parameter.

The main idea of the invention is to adjust at least one parameter that inter alia affects a reliable reception in the target reception area, namely the number of transmitters used, the transmission power, the modulation scheme, the coding scheme and/or the subcarrier spacing. Besides these parameters which may be adjusted, the reliable reception in the target reception area is also affected by parameters that cannot be adjusted by the system, for instance weather conditions, time, priority of services and number of users in the target reception area.

By adjusting at least one of the parameters, energy efficiency can be increased since the energy consumption can be lowered, for instance in certain times, and/or a coverage, namely the target reception area, can be increased at the same energy level, e.g. without increasing energy consumption.

Since the at least one parameter is adjusted based on the event detected, the adjustment can be done in a dynamic manner, thereby reacting on changing conditions. For instance, lower data rates and/or less services may be required in certain times such that the energy consumption can be lowered in those times. Moreover, it might not be necessary to provide all services in the targeted reception area the entire day such that some services may be interrupted for certain times or the coverage area is reduced for at least one service during a certain time, for instance at night.

Accordingly, the at least one parameter is adjusted in order to be optimized such that, for instance, the target reception area is increased and/or the transmission power is reduced.

Moreover, the number of services may be reduced at night such that the remaining required data rate is available at a lower modulation scheme and/or a lower coding scheme. Therefore, the transmission power can be reduced without scarifying the target reception area, namely the coverage.

Generally, the modulation scheme and the coding scheme may be combined to a modulation and coding scheme (MCS).

An aspect provides that the system is configured, in a default operation mode, to transmit the downlink signals based on standard values for the number of transmitters used, the transmission power, the modulation scheme, the coding scheme and/or the subcarrier spacing, and wherein the control module is configured to change at least one of the standard values based on the event detected. The default operation mode may correspond to the operation mode known from the state of the art. Depending on the event detected, at least one of the standard values is changed in order to optimize the operation of the system accordingly. Depending on the event, a different parameter may be adjusted, e.g. the standard value of a certain parameter may be changed.

Another aspect provides that the system has several operation modes that comprise:
- a default operation mode, in which standard values are applied for the number of transmitters used, the transmission power, the modulation scheme, the coding scheme and the subcarrier spacing, as well as
- an energy saving operation mode, in which the modulation scheme and/or the coding scheme as well as the transmission power are reduced compared to the standard values, thereby saving energy, but maintaining the target reception area,
- a data rate maximization operation mode, in which the modulation scheme and/or the coding scheme as well as the transmission power are increased compared to the standard values, thereby maximizing a data rate,
- a target reception area increasing operation mode, in which the modulation scheme and/or the coding scheme are/is reduced compared to the standard values and the transmission power is maintained, thereby increasing the target reception area at the same energy level, and/or
- a target reception area maximization operation mode, in which the modulation scheme and/or the coding scheme are/is reduced compared to the standard values and the transmission power is increased compared to the standard value, thereby maximizing the target reception area, particularly for broadcasting warning messages.

In other words, the modulation scheme and/or the coding scheme as well as the transmission power may be reduced compared to standard values (energy saving operation mode), thereby saving energy, but maintaining the target reception area. In other words, the number of services may be reduced at night such that the remaining required data rate is available at a lower modulation scheme and/or coding scheme. Therefore, the transmission power can be reduced without scarifying the target reception area.

The modulation scheme and/or the coding scheme as well as the transmission power may be increased compared to standard values (data rate maximization operation mode), thereby maximizing a data rate.

The modulation scheme and/or the coding scheme may be reduced compared to standard values and the transmission power may be maintained (target reception area increasing operation mode), thereby increasing the target reception area at the same energy level.

For example, it may be desired to increase the size of the target reception area and number of (mobile) users for a given (maximum) transmission power. This can be achieved by reducing the modulation scheme and/or the coding scheme and offer appropriate services (at reduced data rates).

The modulation scheme and/or the coding scheme may be reduced compared to standard values and the transmission power may be increased compared to a standard value (target reception area maximization operation mode), thereby maximizing the target reception area, particularly for broadcasting warning messages. For instance, warning messages are typically transmitted on low modulation scheme and/or the coding scheme. The control module can evaluate a warning area where the warning message(s) shall be broadcasted. If required the power of the at least one transmitter can be increased to extend the target reception area, namely the coverage area.

The system may also comprise an operation mode in which the target reception area is reduced, e.g. over night. In other words, the target reception area may also be reduced during the energy saving operation mode, e.g. by only reducing the transmission power, but maintaining the modulation scheme and/or the coding scheme.

Accordingly, the system comprises at least two different operation modes, namely one operation mode in addition to the default operation mode. However, the system may also comprise more than two operation modes, namely all operation modes described above. The different operation modes, particularly the ones different to the default operation mode, are triggered by presence of the event, for instance a certain time. Besides a certain time as event, the event may also be triggered, for instance manually and/or automatically.

Particularly, the target reception area maximization operation mode may be triggered by an authority in case of broadcasting warning messages.

In contrast thereto, the energy saving operation mode may be based on time.

Generally, the system may comprise operation modes configured to save energy, to increase the target reception area, and/or to increase the data rate. This can be achieved by adjusting the transmission power, the number of transmitters, and/or the number of services transmitted/provided, e.g. by adjusting the modulation scheme, the coding scheme and/or the subcarrier spacing.

The subcarrier spacing, the modulation scheme and/or the coding scheme are/is associated with the number of services transmitted/provided by the system.

As aspect provides that the event is a temporal event, particularly a certain time. Time can be used to influence the behavior of the system, e.g. the respective operation mode of the system. Hence, the energy saving operation mode may be activated overnight.

In general, the system, particularly the at least one transmitter, covers a predefined area, namely the target reception area, in the default operation mode.

The control module may control the at least one transmitter, particularly the parameters used for transmitting the downlink signals. For instance, at least one rule may be implemented and used by the control module for controlling the at least one transmitter.

The at least one rule may define that from a first point in time, e.g. midnight, to a second point in time, e.g. 8 am, the transmission power is reduced to a predefined value, for instance 75% of maximum, and the modulation scheme and/or the coding scheme is reduced to a certain predefined value, for instance such that only 60% of the services are transmitted. This however results in a (substantially) similar coverage area, namely the target reception area, compared to the default operation mode, for instance a transmission power of 100% of the maximum power with all services available, namely maximum modulation scheme and/or the coding scheme. This operation relates to the energy saving operation mode described above, as the target reception area is maintained while the energy required is reduced due to the reduced transmission power. The target reception area can be maintained nevertheless due to the reduction of the modulation scheme and/or the coding scheme, namely reducing the services transmitted.

A further aspect provides that the system, particularly the control module, comprises a clock, wherein the control module is configured to adjust the at least one parameter based on a temporal information received from the clock, wherein the temporal information received from the clock is the event. The clock relates to an internal clock of the system. The clock is used to temporarily adjust the at least one parameter. Put differently, the clock provides the respective event, namely the temporal event, which triggers adjusting the at least one parameter.

Since the event may be a temporal event, the system may determine the actual time, e.g. by means of the clock, for identifying/detecting the presence of the event. For instance, it is verified whether it is night, particularly for operating the system in the energy saving operation mode.

The control module may be configured to adjust the at least one parameter automatically and/or dynamically, particularly several times per day. As indicated above, the energy saving operation mode may be implemented for a certain time range, e.g. over the night, whereas the default operation mode is used during the day. In addition, the data rate maximization operation mode may be used during a certain time period, for instance in case of a sports event that is broadcasted like a world cup or Olympic Games. Sport events, concerts or similar events may require a high data rate so that the data rate maximization operation mode can be activated for the time period associated therewith.

The system can comprise an interface, e.g. a mobile network interface, configured to receive uplink information, and wherein the control module is configured to process the uplink information received, in particular wherein the uplink information received relates to the event. The user equipments (UEs), like mobile phones, receiving the downlink signals may also communicate information to the system via an uplink channel established. The UEs communicate via a mobile network interface, as they typically relate to participants of a mobile network established by the at least one transmitter. In fact, the UEs are connected devices. This means that the UEs have one or more other radio channel which can be used to communicate uplink information to the control module, e.g. a Broadcast Core Network. Therefore, it is possible to receive information from the UEs about receiving conditions, location and consumption of service(s). This is taken into account for determining the at least one parameter to be adjusted, namely for optimization, e.g. increasing the target reception area, saving energy and/or increasing data rate(s).

Besides the UEs, the uplink information may also be provided by an authority or a service provider. Hence, the interface may also relate to a secure interface. Via the (secure) interface, the authority or the service provider may trigger the control module to control the at least one transmitter to change the operation mode, for instance activating the target reception area maximization operation mode. Once the target reception area maximization operation mode is activated, the system may broadcast warning messages within a maximized target reception area.

For instance, the system comprises a user output interface that is configured to illustrate the at least one parameter adjusted, particularly all parameters used for transmitting the downlink signals. An operator of the system may graphically obtain the information about the parameter(s), namely the actual value(s) of the parameter(s). Particularly, values different to the standard values are illustrated, e.g. in a highlighted manner like a warning color, for instance red. Thus, the operator can easily understand how the system is currently operated and, particularly, which parameter differs from the default operation mode.

Particularly, the system establishes a single-frequency network (SFN). Generally, the single-frequency network is a broadcast network where several transmitters simultaneously transmit the same signal over the same frequency channel. Thus, the system may comprise more than one transmitter, for instance twelve transmitters.

The system may however also establish a multi-frequency network (MFN). Hence, the several transmitters simultaneously transmit the same signal over several frequency channels. Put differently, the MFN uses multiple radio frequencies or radio frequency channels to transmit the signals, e.g. media content.

The system may be configured to broadcast downlink signals, in particular wherein the system is a warning system that is configured to broadcast warning messages. As described above, the system may be operated at least in a certain time period as a warning system, namely during the target reception area maximization operation mode.

For example, the control module is provided by a broadcast core network, e.g. a 5G core network. The 5G core network typically receives feedback from the participants of the associated network, for instance by means of the mobile network interface for receiving the uplink information.

In fact, the 5G core network is able to collect information, evaluate the information and control a broadcast network accordingly, e.g. the at least one transmitter. Therefore, the 5G core network may not only control services and RAN parameters (modulation scheme, coding scheme, subcarrier spacing), but also the transmission power.

The at least one parameter adjusted may be switched back to a standard value. As described above, the system may switch between different operation modes, for instance from the default operation mode to another operation mode and back to the default operation mode. The switching back may be triggered by another event, for instance another temporal event. Consequently, the default operation mode may be interrupted for a certain time period, wherein the beginning of the certain time period relates to the event and the ending of the certain time period relates to the other event, e.g. the one used for switching back.

Generally, the system may also switch between operation modes different to the default operation modes. In other words, it is not necessary that the system has to be switched back to the default operation mode.

The downlink signals transmitted may comprise audio and/or video data.

The term "module" is understood to describe suitable hardware, suitable software, or a combination of hardware and software that is configured to have a certain functionality. The hardware may, inter alia, comprise a CPU, a GPU, an FPGA, an ASIC, or other types of electronic circuitry.

The foregoing aspects and many of the attendant advantages of the claimed subject matter will become more readily appreciated as the same become better understood by reference to the following detailed description, when taken in conjunction with the accompanying drawings, wherein:
- Figure 1 schematically shows a schematic overview of a system according to the invention,
- Figure 2 schematically shows overview with different scenarios, and
- Figure 3 schematically shows a diagram illustrating a triangle defined by three parameters

The detailed description set forth below in connection with the appended drawings, where like numerals reference like elements, is intended as a description of various embodiments of the disclosed subject matter and is not intended to represent the only embodiments. Each embodiment described in this disclosure is provided merely as an example or illustration and should not be construed as preferred or advantageous over other embodiments. The illustrative examples provided herein are not intended to be exhaustive or to limit the claimed subject matter to the precise forms disclosed.

For the purposes of the present disclosure, the phrase "at least one of A, B, and C", for example, means (A), (B), (C), (A and B), (A and C), (B and C), or (A, B, and C), including all further possible permutations when more than three elements are listed. In other words, the term "at least one of A and B" generally means "A and/or B", namely "A" alone, "B" alone or "A and B".

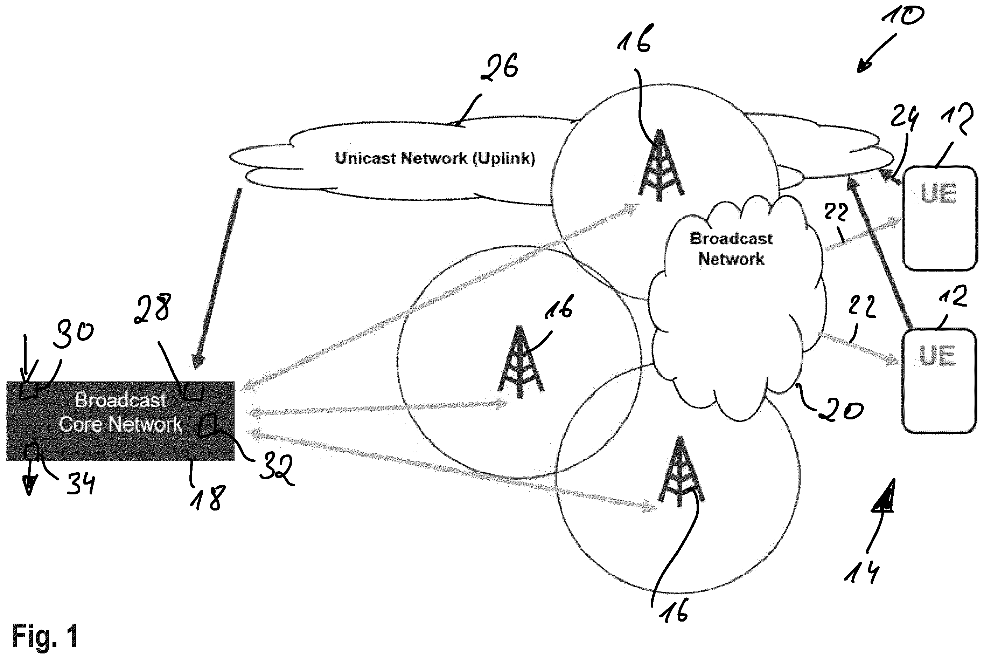

Figure 1 schematically shows a system 10 for transmitting downlink signals to a user equipment 12 in a target reception area 14.

In the shown embodiment, the system 10 comprises several transmitters 16 for transmitting the downlink signals and a control module 18 that is configured to control the transmitters 16. The control module 18 is established by a Broadcast Core Network (BCN).

The system 10, particularly the transmitters 16 transmitting the downlink signals, create a broadcast network 20 to which the user equipments (UEs) 12 are connected as participants. Since the system 10 comprises the several transmitters 16, the system 10 may establish a single-frequency network (SFN). In other words, the broadcast network 20 is a single-frequency network (SFN).

Accordingly, downlink channels 22 are established between the transmitters 16 and the UEs 12, via which the downlink signals are transmitted from the transmitters 16 to the UEs 12.

In addition, it is shown that uplink channels 24 are established between the transmitters 16 and the UEs 12, via which uplink signals are transmitted from the UEs 12 to the transmitters 16. Hence, the transmitters 16 ma comprise a receiving capacity. Put differently, the transmitters 16 may relate to transceivers configured to transmit signals and to receive signals, namely to transmit/broadcast downlink signals to the UEs 12 and to receive uplink signals from the UEs 12.

The uplink signals may contain uplink information, for instance information obtainable by the UEs 12 like receiving conditions, location and/or consumption.

As also shown in Figure 1, the transmitters 16 and the control module 18 are connected with each other in a bidirectional manner such that the content to be broadcasted via the transmitters is exchanged, but also the uplink information received from the UEs 12.

Besides the uplink channels 24 established via the broadcast network 20, a unicast network 26 may also be established for forwarding the uplink information from the UEs 12 to the control module 18.

In fact, the unicast network 26 provides a direct uplink, namely without usage of the broadcast network 20. Consequently, resources of the broadcast network 20 can be saved when using the unicast network 26 for forwarding the uplink information.

Accordingly, the system 10, particularly the control module 18, comprises an interface 28, e.g. a mobile network interface, configured to receive the uplink information, for instance via which unicast network 26. The control module 18 receives and processes the uplink information received.

Alternatively or additionally to the mobile network interface, the system 10, particularly the control module 18, may also comprise an authority interface 30 via which an authority and/or a service provider may forward control instructions for the control module 18, e.g. for triggering the control module 18 to control the transmitter(s) 18.

It is further shown in Figure 1 that the system 10 comprises a clock 32 that is implemented in the control module 18. The clock 32 provides temporal information based on which the control module 18 may control the transmitters 16.

Generally, the control module 18 is configured to control the transmitter(s) 18 to transmit the downlink signals via the broadcast network 20 to the UEs 12. Actually, parameters used for transmitting the downlink signals are controlled by means of the control module 18, namely a number of transmitters used, a transmission power, a modulation scheme, a coding scheme and/or a subcarrier spacing.

The controlling may be based on an event detected. Actually, the uplink information received via the interface 28 relates to the event or the temporal information obtained from the clock 32. Thus, the event may be a temporal event.

In fact, the system 10 may be operated in a default operation mode, in which standard values are applied for the number of transmitters used, the transmission power, the modulation scheme, the coding scheme and the subcarrier spacing.

In case, the event is detected, e.g. a certain uplink information is gathered or a point in time is reached, namely a certain time like 12 pm, at least one parameter is adjusted. Put differently, the standard value of at least one parameter is changed based on the event detected.

Hence, a different operation mode is obtained. For instance, the system 10 may comprise further operation modes.

An energy saving operation mode may be applied. In the energy saving operation mode, the modulation scheme and/or the coding scheme as well as the transmission power are reduced compared to the standard values used in the default operation mode, thereby saving energy, but maintaining the target reception area. This operation mode may be used in case services with low data rates are available, as energy is saved while retaining reception in the target reception area, namely the coverage area.

A data rate maximization operation mode may be applied. In the data rate maximization operation mode, the modulation scheme and/or the coding scheme as well as the transmission power are increased compared to the standard values used in the default operation mode, thereby maximizing a data rate. Accordingly, a maximum data rate is available for many UEs 12.

A target reception area increasing operation mode may be applied. In the target reception area increasing operation mode, the modulation scheme and/or the coding scheme are/is reduced compared to the standard values used in the default operation mode and the transmission power is maintained, thereby increasing the target reception area at the same energy level. Accordingly, the number of UEs 12 can be increased.

A target reception area maximization operation mode may be applied. In the target reception area maximization operation mode, the modulation scheme and/or the coding scheme are/is reduced compared to the standard values used in the default operation mode and the transmission power is increased compared to the standard value used in the default operation mode, thereby maximizing the target reception area. Particularly, the target reception area maximization operation mode may be used for broadcasting warning messages. This operation mode ensures that a maximum of UEs 12 can be reached which is useful for broadcasting warning messages, namely in emergency situations.

The system 10 also comprises a user output interface 34 that is configured to illustrate the at least one parameter adjusted, particularly all parameters used for transmitting the downlink signals. Consequently, an operator of the system 10 is enabled to identify which operation mode is actually used by the system 10.

The control module 18 switches between the different operation modes dynamically and automatically, namely several times per day.

For instance, the energy saving operation mode is applied overnight, wherein the default operation mode may be used during the day. In case the target reception area shall be increased due to a certain event detected, for instance a triggering by an authority or a service provider, the target reception area increasing operation mode and/or the target reception area maximization operation mode may be used for a certain period of time.

The control module 18 may also receive information about the target reception area, for instance by means of the uplink information forwarded by the UEs 12.

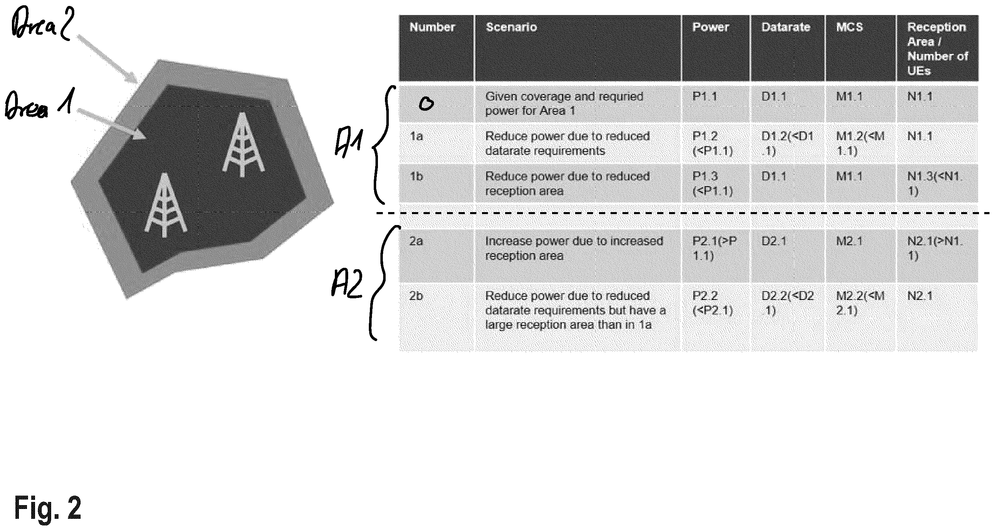

In general, the system 10, particularly the control module 18, can be used for different scenarios as shown in the overview of Figure 2.

A default scenario associated with the default operation mode is indicated by number 0, whereas further scenarios are indicated by 1a, 1b, 2a, and 2b.

In a default scenario associated with a first Area, namely Area 1, the respective standard values are indicated by 1.1, namely standard transmission power P1.1, standard data rate D1.1, standard modulation scheme and/or the coding scheme (MCS) M1.1, and standard target reception area (N1.1).

Specifically, a first scenario indicated by 1a is to reduce transmission power due to reduced data rate requirements causes to reduce the modulation scheme and/or the coding scheme compared to the standard value, namely M1.2 < M1.1. As shown, the target reception area can be maintained (N1.1) compared to the default scenario while the transmission power is reduced (P1.2 < P1.1). The data rate is also decreased compared to the standard value (D1.2 < D1.1).

According to a second scenario indicated by 1b, transmission power is reduced due to reduced target reception area. This scenario causes to maintain the modulation scheme and/or the coding scheme, namely M1.1. As shown, the target reception area is reduced compared to the default scenario (N1.3 < N1.1) and the transmission power is reduced (P1.3 < P1.1). The data rate is maintained (D1.1).

According to a third scenario indicated by 2a and associated with a larger target reception area A2 compared to the first area A1, transmission power is increased due to the increased target reception area. This scenario causes to maintain the modulation scheme and/or the coding scheme at a standard value for the area, namely M2.1. This standard value (M2.1) may be similar to the standard value for the first area (M1.1), but it could be different. Actually, this depends on the respective size(s). As shown, the target reception area is increased compared to the default scenario of the first area (N2.1 > N1.1) and the transmission power is increased (P2.1 > P1.1). The data rate is maintained at a standard value for the area, namely D2.1. This standard value (D2.1) may be similar to the standard value for the first area (D1.1), but it could be different. Actually, this also depends on the respective size(s).

According to a fourth scenario indicated by 2b, also associated with the larger target reception area A2 compared to the first area A1, the transmission power is reduced due to reduced data rate requirements. This scenario causes to reduce the modulation scheme and/or the coding scheme compared to the standard value for the respective target reception area A2, namely M2.2 < M2.1. As shown, the target reception area can be maintained (N2.1) compared to the default scenario for the larger target reception area A2 while the transmission power can be reduced compared to the previous scenario (P2.2 < P2.1). The data rate is also decreased compared to the standard value for the larger target reception area A2 (D2.2 < D2.1).

Consequently, the control module 18 is enabled to take different scenarios into account while controlling the transmitters 16 differently, namely the parameters used for transmitting the downlink signals. Hence, the system 10 may be operated in different operation modes which depends on the respective scenario to be taken into account.

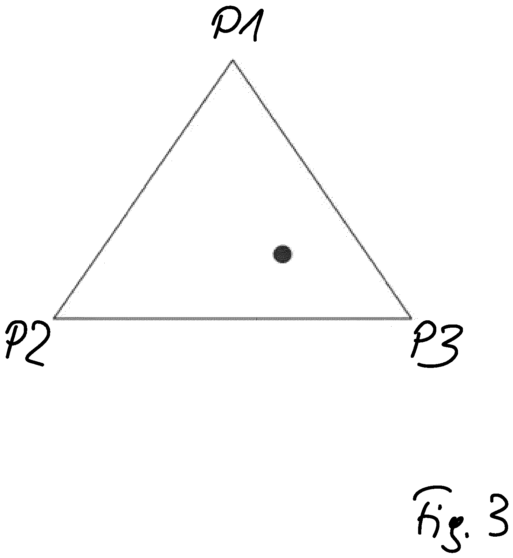

In Figure 3, a triangle is exemplarily illustrated which comprises three parameters P1, P2, P3. Within the triangle defined by the three parameters P1, P2, P3, the control module 18 may find a setting (indicated by the dot within the triangle) for transmitting the downlink signals based on an event detected. In fact, the three parameters P1, P2, P3 may relate to three of the following parameters a number of transmitters 16 used, a transmission power, a modulation scheme, a coding scheme and/or a subcarrier spacing. For instance, the parameters may be selected so as to reflect the reception area/number of users, e.g. by the number of transmitters 16 used, the transmission power, and the modulation and coding scheme, MCS, namely the respective data rate.

Certain embodiments disclosed herein, particularly the respective module(s) and/or unit(s), utilize circuitry (e.g., one or more circuits) in order to implement standards, protocols, methodologies or technologies disclosed herein, operably couple two or more components, generate information, process information, analyze information, generate signals, encode/decode signals, convert signals, transmit and/or receive signals, control other devices, etc. Circuitry of any type can be used.

In an embodiment, circuitry includes, among other things, one or more computing devices such as a processor (e.g., a microprocessor), a central processing unit (CPU), a digital signal processor (DSP), an application-specific integrated circuit (ASIC), a field-programmable gate array (FPGA), a system on a chip (SoC), or the like, or any combinations thereof, and can include discrete digital or analog circuit elements or electronics, or combinations thereof. In an embodiment, circuitry includes hardware circuit implementations (e.g., implementations in analog circuitry, implementations in digital circuitry, and the like, and combinations thereof).

In an embodiment, circuitry includes combinations of circuits and computer program products having software or firmware instructions stored on one or more computer readable memories that work together to cause a device to perform one or more protocols, methodologies or technologies described herein. In an embodiment, circuitry includes circuits, such as, for example, microprocessors or portions of microprocessor, that require software, firmware, and the like for operation. In an embodiment, circuitry includes one or more processors or portions thereof and accompanying software, firmware, hardware, and the like.

The present application may reference quantities and numbers. Unless specifically stated, such quantities and numbers are not to be considered restrictive, but exemplary of the possible quantities or numbers associated with the present application. Also in this regard, the present application may use the term "plurality" to reference a quantity or number. In this regard, the term "plurality" is meant to be any number that is more than one, for example, two, three, four, five, etc. The terms "about", "approximately", "near" etc., mean plus or minus 5% of the stated value.

## Claims

1. A system (10) for transmitting downlink signals to a user equipment (12) in a target reception area (14), wherein the system (10) comprises a control module (18) and at least one transmitter (16), wherein the control module (18) is configured to control the at least one transmitter (16), wherein the at least one transmitter (16) is configured to establish a downlink channel (22) to the user equipment (12), via which downlink signals are transmitted to the user equipment (12) in the target reception area (14), wherein the control module (18) is configured to adjust at least one parameter for transmitting the downlink signals based on an event detected, and wherein the at least one parameter is a number of transmitters (16) used, a transmission power, a modulation scheme, a coding scheme and/or a subcarrier spacing.

2. The system (10) according to claim 1, wherein the system (10) is configured, in a default operation mode, to transmit the downlink signals based on standard values for the number of transmitters (16) used, the transmission power, the modulation scheme, the coding scheme and/or the subcarrier spacing, and wherein the control module (18) is configured to change at least one of the standard values based on the event detected.

3. The system (10) according to claim 1 or 2, wherein the system (10) has several operation modes that comprise:
- a default operation mode, in which standard values are applied for the number of transmitters (16) used, the transmission power, the modulation scheme, the coding scheme and the subcarrier spacing,
- an energy saving operation mode, in which the modulation scheme and/or the coding scheme as well as the transmission power are reduced compared to the standard values, thereby saving energy, but maintaining the target reception area (14),
- a data rate maximization operation mode, in which the modulation scheme and/or the coding scheme as well as the transmission power are increased compared to the standard values, thereby maximizing a data rate,
- a target reception area increasing operation mode, in which the modulation scheme and/or the coding scheme are/is reduced compared to the standard values and the transmission power is maintained, thereby increasing the target reception area (14) at the same energy level, and
- a target reception area maximization operation mode, in which the modulation scheme and/or the coding scheme are/is reduced compared to the standard values and the transmission power is increased compared to the standard value, thereby maximizing the target reception area (14), particularly for broadcasting warning messages.

4. The system (10) according to any of the preceding claims, wherein the system (10), particularly the control module (18), comprises a clock (32), wherein the control module (18) is configured to adjust the at least one parameter based on a temporal information received from the clock (32), wherein the temporal information received from the clock (32) is the event.

5. The system (10) according to any of the preceding claims, wherein the control module (18) is configured to adjust the at least one parameter automatically and/or dynamically, particularly several times per day.

6. The system (10) according to any of the preceding claims, wherein the system (10) comprises an interface (28, 30), e.g. a mobile network interface, configured to receive uplink information, and wherein the control module (18) is configured to process the uplink information received, in particular wherein the uplink information received relates to the event.

7. The system (10) according to any of the preceding claims, wherein the system (10) comprises a user output interface (34) that is configured to illustrate the at least one parameter adjusted, particularly all parameters used for transmitting the downlink signals.

8. The system (10) according to any of the preceding claims, wherein the system (10) establishes a single-frequency network and/or wherein the system (10) is configured to broadcast downlink signals, in particular wherein the system (10) is a warning system that is configured to broadcast warning messages.

9. A method of controlling a system (10) for transmitting downlink signals to a user equipment (12) in a target reception area (14), wherein the method comprises the steps of:
- Detecting an event,
- Adjusting at least one parameter for transmitting the downlink signals based on the event detected, wherein the at least one parameter is a number of transmitters (16) used, a transmission power, a modulation scheme, a coding scheme and/or a subcarrier spacing, and
- Transmitting a downlink signal based on at least one adjusted parameter.

10. The method according to claim 9, wherein the event is a temporal event, particularly a certain time.

11. The method according to claim 9 or 10, wherein the at least one parameter adjusted is switched back to a standard value.

12. The method according to any one of claims 9 to 11, wherein the modulation scheme and/or the coding scheme as well as the transmission power are reduced compared to standard values, thereby saving energy, but maintaining the target reception area (14).

13. The method according to any one of claims 9 to 12, wherein the modulation scheme and/or the coding scheme as well as the transmission power are increased compared to standard values, thereby maximizing a data rate.

14. The method according to any one of claims 9 to 13, wherein the modulation scheme and/or the coding scheme are/is reduced compared to standard values and the transmission power is maintained, thereby increasing the target reception area (14) at the same energy level.

15. The method according to any one of claims 9 to 14, wherein the modulation scheme and/or the coding scheme are/is reduced compared to standard values and the transmission power is increased compared to a standard value, thereby maximizing the target reception area (14), particularly for broadcasting warning messages.
